# DEMANDE DE BREVET EUROPEEN

(11) **EP 3 041 234 A1**
(43) Date de publication de la demande: **06.07.2016**
(21) Numéro de dépôt: 15203271.0
(22) Date de dépôt: 31.12.2015
(51) Int. Cl.: H04N 19/467, H04N 19/91, H04N 1/32

(54) **PROCÉDÉ DE PROTECTION DE DONNÉES ÉCHANGÉES ENTRE UN CODEUR ET UN DÉCODEUR DANS UNE INSTALLATION VIDÉO, CODEUR, DÉCODEUR ET SYSTÈME DE CODAGE/DÉCODAGE ASSOCIÉS**

(30) Priorité: 31.12.2014 FR 1403059
(71) Demandeur: THALES, 92400 Courbevoie (FR)
(72) Inventeur: BERGERON, Cyril, 92622 GENNEVILLIERS CEDEX (FR); LECOMTE, Sébastien, 92622 GENNEVILLIERS CEDEX (FR)
(74) Mandataire: Blot, Philippe Robert Emile

(57) **Abrégé**

Ce procédé comprend les étapes suivantes de : fourniture de premières données (D1), et de deuxièmes données (D2) ; détermination de choix de pré-codage (C1, C2) des premières données (D1), en fonction des deuxièmes données (D2) et suivant une méthode de stéganographie prédéterminée ; pré-codage des premières données (D1) en fonction des choix de pré-codage (C1, C2) déterminés, les premières données précodées (D1p) et les choix de pré-codage (C1, C2) formant une suite de symboles ; codage de chaque symbole qui correspondant, une fois codé, à un groupe de bits successifs ; identification, dans chaque groupe de bits, de la présence d'un ou plusieurs bits à chiffrer ; chiffrement du ou des bits à chiffrer identifiés ; mise en forme du flux de bits chiffré, suivant un algorithme de codage entropique prédéterminé ; transmission du flux mis en forme (F3) au décodeur (14).

## Description

La présente invention concerne un procédé de protection de données échangées entre un codeur et un décodeur d'un système de codage/décodage d'une installation vidéo.

Les échanges de données vidéo, et plus généralement, de données multimédia incorporant de la vidéo, sont de plus en plus nombreux et de plus en plus importants. Ainsi, un enjeu persistant, dans le domaine des échanges de données multimédia incorporant de la vidéo, est de garantir la fiabilité et la confidentialité des données échangées.

Afin d'améliorer la confidentialité des données transmises sur un canal de communication, il est connu d'utiliser des méthodes de stéganographie, qui permettent de cacher de l'information dans un message vidéo. Plus précisément, la stéganographie consiste à modifier d'une façon spécifique un premier message vidéo, également appelé « message de support ou de couverture », en fonction de deuxièmes données relatives à un deuxième message, également appelé « message à cacher ». Le premier message modifié est celui qui est transmis sur le canal de communication. L'objectif est que la modification du premier message soit imperceptible, pour toute personne ne connaissant pas la méthode de stéganographie utilisée, c'est-à-dire la façon spécifique avec laquelle le premier message a été modifié.

Il est en outre connu de chiffrer le message à cacher via une méthode de cryptographie. Celle-ci permet de rendre le message à cacher inintelligible à toute personne qui ne dispose pas des moyens permettant de décrypter le message à cacher. Le message chiffré est ensuite intégré par stéganographie dans le message de support.

Cependant, de telles méthodes de transmission d'un message à cacher restent imparfaites. Elles sont notamment peu robustes face aux méthodes, dites méthodes de stéganalyse, permettant de détecter la présence d'un message à cacher dans un message vidéo modifié et, éventuellement, de récupérer ledit message à cacher. De telles méthodes de stéganalyse sont décrites dans le document.

Le but de l'invention est de proposer un procédé de protection de données transmises entre un codeur et un décodeur qui permet d'améliorer la confidentialité des données échangées, en offrant notamment une meilleure résistance vis-à-vis des méthodes de stéganalyse.

A cet effet, l'invention a pour objet un procédé de protection des données échangées entre un codeur et un décodeur d'un système de codage/décodage d'une installation vidéo, un codeur et un décodeur d'un système de codage/décodage, ainsi qu'un système de codage/décodage selon les revendications.

Ainsi, grâce aux étapes de pré-codage puis de chiffrement, le flux de bits transmis sur le canal de communication résiste mieux aux méthodes de stéganalyse connues. De ce fait, la confidentialité des deuxièmes données est améliorée. En effet, les méthodes de stéganalyse connues sont basées sur l'étude des statistiques d'informations image, telles que la luminosité ou les couleurs, contenues dans les données échangées ; lesquelles statistiques d'informations images étant altérées par le procédé de chiffrement.

L'invention sera mieux comprise et d'autres avantages de celle-ci apparaîtront plus clairement à la lumière de la description qui va suivre, donnée uniquement à titre d'exemple non limitatif, et faite en se référant aux dessins annexés sur lesquels :
- la figure 1 est une représentation schématique d'un mode de réalisation d'un système de codage/décodage conforme à l'invention ;
- la figure 2 est un organigramme d'un procédé de codage de données mise en oeuvre par le système de codage/décodage de la figure 1 ; et
- la figure 3 est un organigramme d'un procédé de décodage de données mis en oeuvre par le système de codage/décodage de la figure 1.

### STRUCTURE:

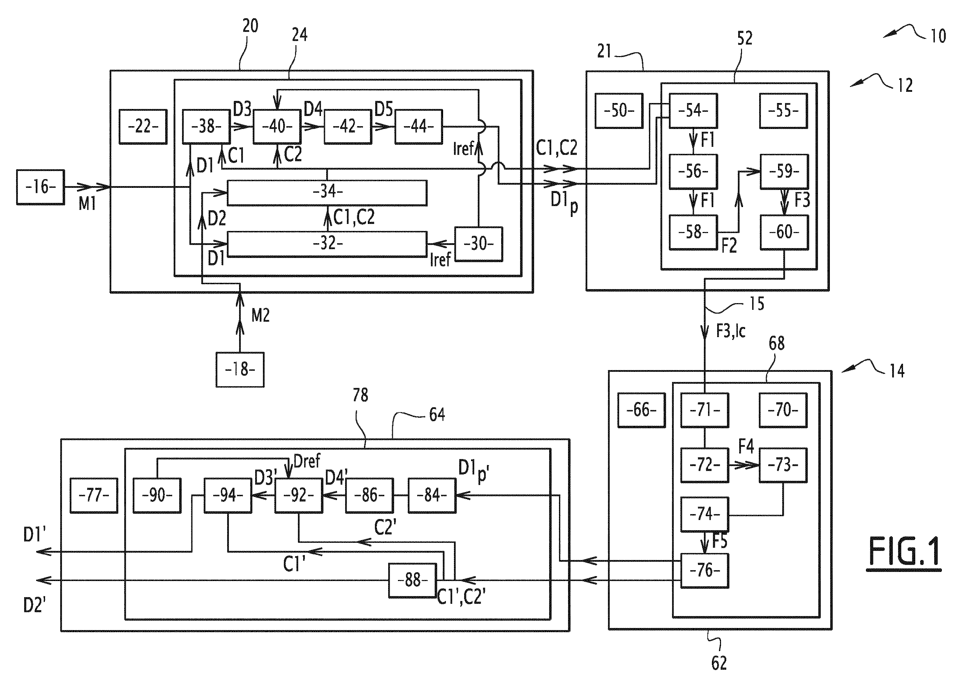

Sur la figure 1, est représenté un système de codage/décodage 10 destiné à être intégré dans une installation vidéo.

Le système de codage/décodage 10 comprend un codeur 12 et un décodeur 14. Le codeur 12 est adapté pour transmettre des données au décodeur 14, via un canal de communication 15, par exemple public, potentiellement non sécurisé.

Le système de codage/décodage 10 est dit conforme à un standard de compression dans le sens où il produit ou consomme un flux de données conforme au standard de compression vidéo. Le standard de compression vidéo est de préférence le standard ISO/IEC 14496-10 MPEG-4 / ITU-T Rec. H.264.10 AVC, également appelé H.264/MPEG-4 AVC, ou le standard ISO/IEC 23008-2 MPEG-H / ITU-T Rec. H.265.2 HEVC également appelé H.265/MPEG-H HEVC.

### Le codeur 12 :

Le codeur 12 est un codeur vidéo et comprend une première unité 16, de fourniture d'un premier message M1, et une deuxième unité 18, de fourniture d'un deuxième message M2.

Le codeur 12 comprend une unité 20 de prétraitement du premier message M1, adaptée pour réaliser un pré-codage du message M1 en fonction de paramètres de pré-codage du message M1, dénommés par la suite choix de pré-codage C1, C2 du message M1. Les choix de pré-codage C1, C2 sont effectuées en fonction du premier message M1, du deuxième message M2 et d'une méthode de stéganographie prédéterminée.

Le codeur 12 comporte également une unité 21 de codage sécurisé des données issues de l'unité 20.

### Les première 16 et deuxième 18 unités de fourniture :

Selon un mode de réalisation préféré, la première unité de fourniture 16 est une mémoire propre à mémoriser le premier message M1.

De même, la deuxième unité de fourniture 18 est une mémoire propre à mémoriser le deuxième message M2.

Le premier message M1 correspond à une image actuelle à transmettre au décodeur 14. L'image actuelle appartient à une vidéo destinée à être codée par le codeur 12 et à être transmise sur le canal 15.

Plus précisément, le premier message M1 est constitué de premières données D1 correspondant par exemple aux valeurs RGB des pixels de l'image actuelle.

Le premier message M1 est également appelé message de support et correspond à un message de couverture pour la stéganographie.

De même, les premières données D1 sont également appelées données de support D1 et correspondent à des données de support à la stéganographie.

Le deuxième message M2 est, par exemple, un texte ou une image. Plus précisément, le deuxième message M2 comprend, par exemple, une signature numérique, permettant une authentification par le décodeur 14 des données transmises sur le canal de communication 15 par le codeur 12.

En variante, le deuxième message M2 comprend un texte à transmettre au décodeur 14 de manière confidentielle.

En variante, le deuxième message M2 comprend un signal audio ou vocodé associé au message M1, à transmettre au décodeur 14 de manière confidentielle sans exploiter un canal de transmission autre.

Le deuxième message M2 est également appelé message à cacher M2 et correspond à un message à transmettre de manière confidentielle au décodeur 14.

Le deuxième message M2 est constitué des deuxièmes données D2.

Les deuxièmes données D2 sont également appelées données à cacher et correspondent à des données à transmettre de manière confidentiel au décodeur 14.

En d'autres termes, les données de support D1 sont destinées à être pré-codées, en fonction des données à cacher D2, au moyen d'une méthode de stéganographie prédéterminée, afin de transmettre au décodeur 12 les données à cacher D2 au décodeur 12 tout en les rendant imperceptibles à tout décodeur ne disposant pas de la méthode de stéganographie prédéterminée utilisée.

Les méthodes de stéganographie sont connues de l'homme du métier.

La taille du message à cacher M2 est, par exemple, au moins cent fois inférieure à celle du message de support M1.

### L'unité de prétraitement 20 :

L'unité de prétraitement 20 est configurée pour, à la fois, pré-coder les données de support D1 et réaliser la stéganographie selon la méthode prédéterminée.

A cet effet, de manière connue, l'unité de prétraitement 20 est configurée pour déterminer des choix de pré-codage C1, C2 des données de support D1, en fonction des données à cacher D2 et de la méthode de stéganographie, et pour pré-coder les données de support D1 en fonction des choix de pré-codage C1, C2 déterminés.

L'unité de prétraitement 20 fournit alors des données de support pré-codées D1p et les choix de pré-codage C1, C2, qui sont à transmettre au décodeur 14. En effet, le décodeur 14 a besoin des données de support pré-codées D1p et des choix de pré-codage C1, C2, pour retrouver l'information contenue dans le message de support M1, via une opération de post-traitement globalement symétrique de l'opération de prétraitement réalisée par l'unité de prétraitement 20. De même, le décodeur 14 a besoin des choix de pré-codage C1, C2 pour retrouver l'information contenue dans le message à cacher M2, via l'opération de post-traitement.

En d'autres termes, l'information comprise dans le message de support M1 est transcrite par l'unité 20 sous la forme des données de support pré-codées D1p et des choix de pré-codage C1, C2, tandis que l'information comprise dans le message à cacher M2 est transcrite par l'unité 20 sous la forme des choix de pré-codage C1, C2.

En tant que moyen de pré-codage, l'unité de prétraitement 20 est adaptée pour successivement : découper les premières données D1 en blocs de données D3 ; calculer une prédiction des blocs de données D3 suivant, par exemple, une méthode inter-trame ; et réaliser des opérations de transformation spatial-fréquentiel et de quantification.

Plus généralement, on définit comme opération de pré-codage, l'ensemble des opérations connues de l'homme du métier mises en oeuvre au cours d'une compression vidéo, autres que le codage entropique.

En variante, l'unité de prétraitement 20 est adaptée pour réaliser une prédiction intra-trame. La méthode de prédiction intra-trame est connue de l'homme du métier.

En tant que moyen de stéganographie, l'unité de prétraitement 20 est propre à modifier la manière dont sont pré-codées les données de support D1 en fonction des données à cacher D2 et de la méthode de stéganographie prédéterminée.

Plus précisément, l'unité de prétraitement 20 comprend un processeur 22 et une mémoire 24.

Le processeur 22 est configuré pour exécuter des logiciels compris dans la mémoire 24.

La mémoire 24 comprend un logiciel 30 de mémorisation d'une image de référence, un logiciel 32 de calcul des choix de pré-codage C1, C2, un logiciel de modification des choix de pré-codage C1, C2, également appelé logiciel de stéganographie 34, un logiciel 38 de découpage des premières données D1 en blocs de données D3, un logiciel 40 de calcul de données d'erreurs de prédiction D4 suivant, par exemple, une méthode inter-frame, un logiciel 42 de transformation spatial-fréquentiel des données d'erreurs de prédiction D4 en données transformées D5 et un logiciel 44 de quantification des données transformées D5, de manière à obtenir les données de support pré-codées D1 p, qui comprennent une suite de symboles.

Les logiciels de calcul 32 et de stéganographie 34 forment un module de détermination des choix de pré-codage C1, C2.

Les logiciels de découpage 38, de calcul 40, de transformation 42 et de quantification 44 forment un module de pré-codage des premières données en fonction des choix de codage C1, C2.

### Le logiciel de mémorisation 30

Le logiciel de mémorisation 30 mémorise des informations de référence I_{REF} relatives à des données de support D1 précédemment traitées par l'unité de prétraitement 20 et transmises au décodeur 14.

Les informations de référence correspondent à une image, issue de la vidéo à transmettre sur le canal 15, qui a été transmise au décodeur 14 précédemment à l'image actuelle.

En variante, les informations de référence I_{REF} correspondent à des données de support D1 précédemment pré-codés, qui ont subi, au niveau du codeur 12, un décodage symétrique du pré-codage réalisé par l'unité de prétraitement 20 et globalement similaire à un post-décodage réalisé par le décodeur 14.

Ainsi, les informations de référence I_{REF} à partir desquelles l'unité de prétraitement 20 traite les données de support D1 sont identiques à des données de support D1 précédemment transmises au décodeur 14 et décodées par le décodeur 14. Le décodeur 14 dispose donc, pour le décodage, d'informations identiques aux informations de référence I_{REF}, ce qui permet de garantir un décodage optimisé, c'est-à-dire la récupération d'un message le plus proche possible du premier message M1.

### Le logiciel 32 de calcul des choix de pré-codage :

Le logiciel de calcul des choix de pré-codage C1, C2 est configuré pour calculer au moins un choix de pré-codage des données de support D1 et plus généralement plusieurs choix de pré-codage, en fonction des données de support D1 et d'un algorithme de pré-codage prédéterminé.

Les choix de pré-codage C1, C2 et l'algorithme de pré-codage sont relatifs aux opérations réalisées par les logiciels de découpage 38 et de calcul 40.

Les choix de pré-codage C1, C2 sont, par exemple des choix C1 de découpage des premières données D1 et/ou des choix C2 de prédiction des blocs de données D3. Les choix de pré-codage C1, C2 forment une suite de symboles.

Le logiciel de calcul 32 est ainsi propre à calculer un choix de découpage C1, qui est calculé en fonction de la taille de l'image actuelle et des données D1 et correspond à une méthode de découpage des premières données D1 en blocs de données D3. Les blocs de données D3 correspondent alors à des blocs image associés à différentes partie de l'image actuelle. Le choix de découpage C1 correspond par exemple à un découpage de l'image actuelle M1 en 16 ou 32 blocs image, c'est-à-dire en 16 ou 32 blocs de données D3.

Le logiciel de calcul 32 est propre à calculer, pour chaque bloc de données D3, un choix de prédiction C2. Le choix de prédiction C2 correspond à des données de prédiction, c'est-à-dire à un vecteur de mouvement traduisant la différence de position entre, d'une part, la position du bloc image considéré dans l'image actuelle et, d'autre part, la position d'un bloc image de référence dans l'image de référence, le bloc image de référence étant identifié comme globalement similaire au bloc image considéré. Le choix de prédiction C2 est, par exemple, calculé suivant une méthode de prédiction inter-trame.

Le logiciel de calcul 32 est configuré pour diviser l'image de référence et l'image actuelle en blocs image de référence et respectivement en blocs image actuels et pour associer à chaque bloc image actuel, un bloc image de référence choisi, globalement similaire au bloc image actuel, afin de déterminer le vecteur de mouvement. Le vecteur de mouvement permet de retrouver, à partir des valeurs qu'il comprend et de la position du bloc image actuel auquel il correspond, le bloc image de référence choisi.

Le logiciel de calcul est par exemple propre à choisir le vecteur de mouvement à partir de l'algorithme de pré-codage, qui comprend une fonction de coût à minimiser permettant d'identifier dans l'image de référence le bloc image de référence pour lequel les différences avec le bloc image actuel sont minimales.

Dans la suite de la description, le choix de prédiction C2 et le vecteur de mouvement correspondant portent la même référence C2.

### Le logiciel de stéganographie 34

Le logiciel de stéganographie 34 est configuré pour modifier les choix de pré-codage C1, C2 à partir des deuxièmes données D2 et de la méthode de stéganographie prédéterminée.

Le logiciel de stéganographie 34 est par exemple propre à modifier le choix de découpage C1 pour que le logiciel de découpage 38 découpe l'image actuelle en 32 blocs image, lorsqu'un bit à transmettre appartenant aux deuxièmes données D2 a une première valeur égale à « 0 » et pour que le logiciel de découpage 38 découpe l'image actuelle en 16 blocs image, lorsque le bit à transmettre a une deuxième valeur égale à « 1 ».

Le logiciel de stéganographie 34 est également configuré pour modifier la valeur des vecteurs de mouvement C2 en fonction des deuxièmes données D2 et de la méthode de stéganographie prédéterminée. Le logiciel de stéganographie 34 est avantageusement adapté pour modifier la valeur des vecteurs de mouvement C2 tout en minimisant l'impact de ces modifications. En effet, le logiciel de stéganographie est, par exemple, configuré pour minimiser, pour chaque vecteur de mouvement, les différences entre, d'une part, le bloc image de référence associé au vecteur de mouvement précédemment à la modification du vecteur de mouvement et, d'autre part, le bloc image de référence associé au vecteur de mouvement modifié.

Dans un exemple où chaque vecteur de mouvement est représenté sous la forme d'octets, le logiciel de stéganographie est configuré pour modifier en fonction des deuxièmes données D2, c'est-à-dire en fonction des bits à transmettre des deuxièmes données D2, le bit de poids faible de chaque octet ou encore de certains octets présélectionnés.

Le logiciel de stéganographie 34 est par exemple configuré pour remplacer le bit de poids faible des octets présélectionnés par l'un des bits à transmettre des deuxièmes données D2.

Suivant un autre mode d'implémentation, le logiciel de sténographie est propre à modifier directement les données D3, D4, D5 ou D1 p.

### Le logiciel de découpage 38 :

Le logiciel de découpage 38 est configuré pour découper l'image actuelle en blocs image, correspondant à des blocs de données D3, suivant le choix de découpage C1. Chaque bloc image, c'est-à-dire chaque bloc de données D3 correspond à une partie de l'image actuelle.

### Le logiciel 40 de calcul de données d'erreurs de prédiction :

Le logiciel de calcul 40 est configuré pour calculer des données d'erreur de prédiction D4.

Les données d'erreurs de prédiction D4 sont calculées pour chaque bloc de données D3 à partir des données de support D1, des données de prédiction modifiées, c'est-à-dire du choix de prédiction C2 modifié par le logiciel de stéganographie 34, et des informations de référence I_{REF}.

Plus précisément, le logiciel de calcul 40 est configuré pour soustraire chaque bloc image actuel avec le bloc image de référence associé au vecteur de mouvement modifié C2, pour obtenir les données d'erreur de prédiction D4.

Les données d'erreurs de prédiction D4 permettent de compenser les erreurs de prédiction induites par le logiciel de calcul 32 et le logiciel de stéganographie 34 et ainsi de garantir globalement l'intégrité des premières données D1 et la récupération de l'ensemble des premières données D1 au niveau du décodeur 14.

Plus précisément, conformément à la méthode de prédiction inter-trame, un décodeur recevant les choix de prédiction C2 et les données d'erreur de prédiction D4 est propre à récupérer l'intégralité du premier message M1 malgré les modifications des choix de prédiction C2 faites par le logiciel de stéganographie 34. Ainsi, grâce à la transmission des erreurs de prédiction D4, le décodeur 14 est propre à récupérer les données de support D1 dans leur intégralité, sans qu'il y ait d'erreurs apparentes lors de la visualisation des informations relatives aux données de support D1 qui lui permettraient d'identifier la présence des données à cacher D2.

### Le logiciel de transformation 42 :

Le logiciel de transformation 42 est configuré pour transformer du domaine spatial vers le domaine fréquentiel les données d'erreur de prédiction D4. A cet effet, le logiciel de transformation 42 est configuré pour appliquer une méthode de transformation spatial-fréquentiel, telle qu'une transformée en cosinus discrète, aux données d'erreur de prédiction D4, afin de passer d'une représentation dans le domaine spatiale à une représentation dans le domaine fréquentiel. Les données transformées D5 correspondent à une suite de valeurs numériques.

### Le logiciel de quantification 44 :

Le logiciel de quantification 44 est configuré pour réaliser une quantification des données D5 afin d'obtenir les données de support pré-codées D1p. Le logiciel de quantification 44 est configuré pour mémoriser une table de quantification comprenant un ensemble de symboles de valeur prédéterminée. Le logiciel de quantification est propre à substituer les valeurs numériques, correspondant aux données transformées D5, par l'un des symboles compris dans la table de quantification, en appliquant une méthode de quantification choisie. Le logiciel de quantification 44 est, par exemple, propre à substituer les valeurs numériques, correspondant aux données transformées D5, par le symbole de valeur prédéterminée la plus proche.

### L'unité de codage sécurisé 21 :

L'unité de codage sécurisé 21 est configurée pour coder et chiffrer les données de support pré-codées D1 p et les choix de pré-codage C1, C2.

Plus généralement, l'unité de codage sécurisé 21 est adaptée pour, concaténer et coder les données de support pré-codées D1p et des variables de pré-codage relatives aux choix de pré-codage, c'est-à-dire par exemple les choix de pré-codage C1, C2.

Les premières données pré-codées D1p et les choix de pré-codage C1, C2 forment une suite de symboles.

En tant que moyen de codage sécurisé, l'unité 21 met de préférence en oeuvre une méthode de codage sécurisé conforme à l'enseignement du document FR 2 879 878.

En tant que moyen de chiffrement, l'unité 21 met de préférence en oeuvre une méthode de chiffrement du type AES, selon l'acronyme anglais « Advanced Encryption Standard », utilisant une clé de chiffrement.

Plus précisément, l'unité de codage sécurisé 21 comprend un processeur 50 et une mémoire 52.

Le processeur 50 est configuré pour exécuter des logiciels compris dans la mémoire 52.

La mémoire 52 comprend un logiciel 54 de codage des symboles correspondant aux premières données pré-codées D1p et aux choix de pré-codage C1, C2 pour obtenir une suite de mots de code F1.

La mémoire 52 comprend en outre un logiciel 55 de mémorisation d'une table de mots de code et un logiciel 56 d'identification, dans la suite de mots de code F1, des mots de code mémorisés.

La mémoire 52 comporte également un logiciel 58 de chiffrement de sous-mots des mots de code identifiés pour obtenir un flux de bits chiffré F2, un logiciel 59 de mise en forme du flux de bits chiffré F2 et un logiciel 60 de transmission du flux mis en forme F3.

### Le logiciel de codage 54 :

Le logiciel de codage 54 est propre à concaténer les premières données pré-codées D1 p et les choix de pré-codage C1, C2 afin d'obtenir une suite de symboles.

Le logiciel de codage 54 est également configuré pour coder la suite de symboles pour obtenir la suite de mots de code F1 également appelée suite de groupes de bits.

Plus précisément, le logiciel de codage 54 est propre à associer à chaque symbole de la suite de symboles précitée, un groupe de bit prédéterminé, également appelé mot de code, et à coder chaque symbole en le remplaçant par le mot de code correspondant.

Ainsi, chaque symbole correspond une fois codé à un mot de code et la suite de symbole forme, une fois codée, la suite de mots de code F1.

Le logiciel de codage 54 est configuré pour coder la suite de symboles en fonction de la mise en forme du flux de bits chiffré F2 réalisée par le logiciel de mise en forme 59, c'est-à-dire en fonction d'un algorithme de codage entropique prédéterminé appliqué au flux de bits chiffré F2.

### Le logiciel de mémorisation 55 :

Le logiciel de mémorisation 55 mémorise la table de mots de code qui associe à chaque symbole le mot de code correspondant.

### Le logiciel d'identification 56 :

Le logiciel d'identification 56 est propre à identifier dans chaque mot de code de la suite de mots de code F1, la présence d'un sous-mot comprenant un ou plusieurs bits à chiffrer, chaque bit à chiffrer étant tel qu'une modification du bit à chiffrer est sans influence sur le résultat du décodage, réalisé par le décodeur 14, des mots de code qui suivent le mot de code auquel le bit à chiffrer appartient.

Ainsi, chaque sous-mot est déterminé en fonction d'un critère de sélection consistant en ce qu'une modification, dans la suite de mots de code F1, des bits du sous-mot, maintient la compatibilité du flux de bits transmis sur le canal de communication 15, avec le standard de compression et n'entraîne pas de désynchronisation au niveau du décodeur 14. Plus précisément, chaque sous-mot est déterminé de sorte qu'il vérifie qu'une modification du sous-mot du mot de code, dans la suite de mots de code F1, est sans influence sur le résultat du décodage, par le décodeur 14, des mots de codes qui suivent le mot de code auquel le sous-mot appartient. Un exemple de logiciel permettant de déterminer les sous-mots est présenté dans le document FR 2 879 878 aux pages 10 à 18.

Plus généralement, le logiciel d'identification 56 est, par exemple, configuré pour identifier les mots de code modifiables dans la suite de mots de codes, en fonction de la suite de mots de code, de caractéristiques spécifiques du logiciel de chiffrement 58 et du logiciel de mise en forme 59 et de la table de mots de code.

En variante, le logiciel d'identification est propre à mémoriser une table de mots de code modifiables prédéfinie associant à chaque mot de code modifiable un sous-mot. Dans cette variante, le logiciel d'identification est propre à identifier les sous-mots compris dans la suite de mots de code à partir de la table de mots de code modifiables prédéfinie.

### Le logiciel de chiffrement 58 :

Le logiciel de chiffrement 58 est configuré pour générer une clé de chiffrement et pour chiffrer les sous-mots identifiés, c'est-à-dire le ou les bits des sous-mots identifiés, en les substituant par un ou des bits chiffrés à partir de la clé de chiffrement.

Il est à noter que, suite au chiffrement, la substitution de chaque sous-mot identifié par le ou les bits chiffrés conduit à un nouveau mot de code, remplaçant le mot de code associé au sous-mot identifié. Le nouveau mot de code est compris dans la table de mots de code. Une telle caractéristique permet de garantir que le décodeur 14 sera apte à interpréter les bits chiffrés à partir de la table de mots de code.

Le logiciel de chiffrement 58 est, par exemple, propre à sommer les bits identifiés et la clé de chiffrement pour obtenir les bits chiffrés.

Le nombre de bits chiffrés est identique au nombre de bits à chiffrer de sorte que le chiffrement n'entraîne aucune modification du débit entre la suite de mots de code F1 et le flux de bits chiffré F2, donc aucune désynchronisation, ainsi qu'aucune non-conformité au standard de compression.

Plus généralement le logiciel d'identification 56 et le logiciel de chiffrement sont propres à mettre en oeuvre une méthode de chiffrement sélectif.

### Le logiciel de mise en forme 59 :

Le logiciel de mise en forme 59 est adapté pour mettre en forme le flux de bits chiffré F2 afin d'obtenir un flux mis en forme F3. Le logiciel de mise en forme 59 est configuré pour mettre en forme le flux chiffré F2, conformément au standard de compression, en lui appliquant un algorithme de codage entropique prédéterminé. L'algorithme de codage entropique est connu de l'homme du métier et correspond à une méthode de codage sans pertes, dont le but est de transformer la représentation du flux chiffré F2 pour sa compression et/ou sa transmission sur le canal de communication 15. L'algorithme de codage entropique prédéterminé est, par exemple, soit du type CAVLC (de l'anglais *Context Adaptive Variable Length Coding*), soit du type CABAC (de l'anglais *Context Adaptive Binary Arithmetic Coding).*

Le logiciel de mise en forme 59 permet de réaliser la compression du flux de bits chiffré F2, via le remplacement des mots de code chiffrés ou non chiffrés, formant le flux de bits chiffré F2, par des ensembles de bits dont la longueur dépend, par exemple, des propriétés statistiques du flux chiffré F2.

Le logiciel de mise en forme 59 est configuré pour réaliser par exemple un codage de Huffman ou un codage arithmétique.

### Le logiciel de transmission 60 :

Le logiciel de transmission 60 est propre à transmettre sur le canal de communication 15 le flux mis en forme F3.

Le logiciel de transmission 60 est propre à transmettre sur le canal de communication 15, en plus du flux mis en forme F3, un identifiant de chiffrement Ic associé à la clé de chiffrement utilisée par le logiciel de chiffrement 58.

En variante, les choix de pré-codage C1, C2 sont relatifs aux opérations réalisées par les logiciels de transformation et de quantification. Dans cette variante, les choix de pré-codage sont également des choix de transformation spatial-fréquentiel de données, c'est-à-dire à une méthode de transformation spatial-fréquentiel et/ou des choix de quantification de données, c'est-à-dire une méthode de quantification où le logiciel de calcul est également propre à calculer les choix de transformation et les choix de quantification. Le logiciel de stéganographie 34 est alors configuré pour également modifier les choix de transformation et de quantification à partir des deuxièmes données D2 et de la méthode de stéganographie prédéterminée. En outre, dans cette variante, le logiciel de transformation 42 est configuré pour choisir la méthode de transformation utilisée en fonction du choix de transformation et le logiciel de quantification 44 est configuré pour choisir la méthode de quantification utilisée en fonction du choix de quantification.

En variante, le logiciel de stéganographie 34 est configuré pour modifier seulement certains des choix de de pré-codage C1, C2 les autres choix de pré-codage n'étant alors pas modifiés. Dans cette variante, tous les choix de pré-codage sont transmis au logiciel de codage 54 et codés par le logiciel de codage 54.

### Le décodeur 14 :

Le décodeur 14 est propre à réaliser différents traitements qui correspondent sensiblement à un traitement inverse d'un traitement effectué par le codeur 12, dans le but de récupérer les messages M1 et M2 à partir du flux de bits mis en forme F3 reçu depuis le codeur 12. Ainsi, la structure du décodeur 14 est sensiblement symétrique de celle du codeur 12.

Ainsi, le décodeur 14 comporte une unité 62 de décodage du flux de bits mis en forme F3 transmis sur le canal de communication 15 et une unité 64 de post-traitement des données issues de l'unité de décodage 62.

### L'unité de décodage 62 :

L'unité de décodage 62 comprend un processeur 66 et une mémoire 68 et est adaptée pour réaliser les opérations inverses de l'unité de codage sécurisé 21.

Ainsi, la mémoire 68 comprend un logiciel 70 de mémorisation similaire au logiciel de mémorisation 55 et configuré pour mémoriser la table de mots de code qui associe à chaque symbole le mot de code correspondant.

La mémoire 68 comprend également un logiciel 71 de réception, un logiciel 72 de décodage entropique du flux mis en forme F3, un logiciel 73 d'identification des sous-mots chiffrés, un logiciel 74 de déchiffrement et un logiciel 76 de décodage.

Le logiciel de réception 71 est configuré pour recevoir le flux de bits mis en forme F3.

Le logiciel de décodage entropique 72 est propre à décoder le flux de bits mis en forme F3 reçu par le logiciel de réception 71, suivant un algorithme de décodage entropique prédéterminé. L'algorithme de décodage entropique prédéterminé est adapté pour réaliser une opération de codage inverse de celle réalisée par le logiciel de mise en forme 59, afin d'obtenir un flux de bits à déchiffrer F4 également appelé flux décodé F4. Le flux décodé F4 comprend alors une pluralité de mots de code à déchiffrer.

Le logiciel d'identification 73 est configuré pour identifier, dans le flux décodé F4, les sous-mots chiffrés, c'est-à-dire les bits chiffrés par le logiciel de chiffrement 58, en fonction de la suite de mots de code, de caractéristiques spécifiques du logiciel de déchiffrement 74 et du logiciel de décodage entropique 72 et de la table de mots de code.

En variante, le logiciel d'identification 73 est propre à mémoriser la table de mots de code modifiables prédéfinie et à identifier les sous-mots chiffrés à partir de la table de mots de code modifiables prédéfinie.

Le logiciel de déchiffrement 74 est configuré pour mémoriser un tableau de chiffrement associant à une pluralité de clés de chiffrement une pluralité d'identifiants de chiffrement et pour déterminer la clé de chiffrement à appliquer aux sous-mots identifiés en fonction du tableau de chiffrement mémorisé et de l'identifiant Ic transmis par le codeur 12 sur le canal de communication 15. Le logiciel de déchiffrement 74 est configuré pour déchiffrer les sous-mots identifiés par le logiciel d'identification 73 à partir de la clé de chiffrement déterminée, pour obtenir un flux de bits déchiffré F5.

Le logiciel de décodage 76 est configuré pour réaliser un codage inverse de celui réalisé par le logiciel de codage 54, afin d'obtenir des données à post-décoder D1 p', correspondant globalement aux données pré-codés D1 p par le décodeur et des choix de post-décodage C1', C2' correspondant globalement aux choix de pré-codage C1, C2.

Plus précisément le logiciel de décodage 76 est configuré pour récupérer des premiers choix de post-décodage C1' globalement équivalents aux choix de découpage C1 et des deuxièmes choix de post-décodage C2' globalement équivalents aux choix de prédiction C2. Ainsi, les deuxièmes choix de post-décodage C2' sont des vecteurs de mouvement.

### L'unité de post-traitement 64 :

L'unité de post-traitement 64 comprend un processeur 77 et une mémoire 78 et est adaptée pour réaliser les opérations inverses de l'unité de prétraitement 20.

Le processeur 77 est configuré pour exécuter des logiciels compris dans la mémoire 78.

La mémoire 78 comprend un logiciel 84 de quantification inverse de chaque groupe de symboles et un logiciel 86 de transformation fréquentiel-spatial des données issues du logiciel de quantification inverse 84.

Le logiciel de transformation 86 est notamment configuré pour réaliser une transformée fréquentiel-spatial, telle qu'une transformée en cosinus discrète inverse, et permet d'exprimer les données reçues par l'unité de transformation du domaine fréquentiel vers le domaine spatial afin d'obtenir des données inversement transformées D4' correspondant aux données d'erreur de prédiction D4.

La mémoire 78 comprend en outre un logiciel de stéganographie inverse 88 configuré pour déterminer des données cachées D2' équivalentes aux données à cacher D2, c'est-à-dire au deuxième message M2. Le logiciel de stéganographie inverse 88 est propre à déterminer les données cachées D2' à partir de la méthode de stéganographie prédéterminée et des choix de post-décodages C1', C2'.

En variante, le logiciel de stéganographie inverse 88 est propre à déterminer les données cachées D2' à partir de la méthode de stéganographie prédéterminée des choix de post-décodages C1', C2' et également des données à post-décoder D1 p'.

Le logiciel de stéganographie inverse 88 est, par exemple, configuré pour collecter les bits de poids faible des octets présélectionnés des deuxièmes choix de post-décodage, c'est-à-dire des vecteurs de mouvement récupérés, afin de retrouver les données cachées D2' et donc le deuxième message M2.

La mémoire 78 comprend un logiciel 90 de mémorisation de données de référence D_{ref}. Les données de référence D_{ref} sont avantageusement identiques aux informations de référence I_{REF}. Les données de référence D_{ref} correspondent, par exemple, à des données de support D1 décodées par le décodeur 14 et formant une image précédente de référence.

La mémoire 78 comprend également un logiciel 92 de prédiction inverse configuré pour déterminer des blocs de données post-décodées D3', correspondant globalement aux blocs de données D3, à partir des données inversement transformées D4', des deuxièmes choix de post-décodage C2' et des données de référence D_{ref}.

Plus précisément, le logiciel de prédiction inverse 92 est adapté pour identifier pour chaque vecteur de mouvement compris dans les deuxièmes choix de post-décodage C'2 les données de référence, c'est-à-dire un bloc image de référence, auquel il correspond. Le logiciel de prédiction 92 est également configuré pour récupérer les blocs de données post-décodées D3' en modifiant, à partir des données inversement transformées D4', les données de référence identifiées. Une telle méthode d'obtention des blocs de données post-décodées D3' est connu de la méthode de prédiction inter-trame.

Enfin, la mémoire 78 comprend un logiciel 94 de reconstitution du premier message M1 à partir des blocs de données post-décodées D3' et des premiers choix de post-décodage C1' récupérés. Plus précisément, le logiciel de reconstitution 94 est destiné à récupérer des données post-décodées D1' globalement équivalentes aux premières données D1, c'est-à-dire au premier message M1, à partir des blocs de données post-décodées D3' et des premiers choix de post-décodage C1' récupérés.

Les logiciels de quantification inverse 84, de transformation fréquentiel-spatial 86, de mémorisation 90, de prédiction inverse 92 et de reconstitution 94 forment un module de post-décodage configuré pour récupérer l'information contenue dans le premier message M1 à partir du premier ensemble de données à post-décoder D1p' et du deuxième ensemble de choix de post-décodage C1', C2'.

Le logiciel de stéganographie inverse 88 forme un module de détermination ou de récupération de l'information contenue dans le deuxième message M2 en fonction du deuxième ensemble de choix de post-décodage C1', C2' et de la méthode de stéganographie prédéterminée.

En variante, le logiciel de stéganographie inverse 88 forme un module de détermination ou de récupération de l'information contenue dans le deuxième message M2 en fonction du premier ensemble de données à post-décoder D1p', du deuxième ensemble de choix de post-décodage C1', C2' et de la méthode de stéganographie prédéterminée.

### Fonctionnement du codeur 12 :

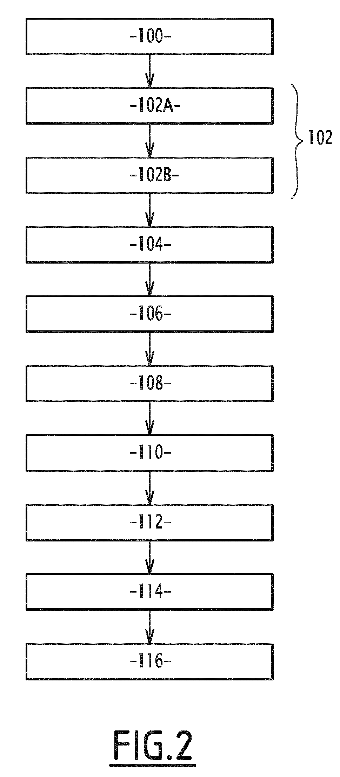

Le fonctionnement du codeur 12 va maintenant être présenté, lors de la mise en oeuvre du procédé de protection de données représenté à la figure 2.

Lors d'une étape initiale de fourniture 100, les première 16 et deuxième 18 unités de fourniture transmettent respectivement à l'unité de prétraitement 20, les premier M1 et deuxième M2 messages.

L'unité 20 dispose alors des premières données D1 et deuxièmes données D2, c'est-à-dire du message de support M1 et du message à cacher M2.

Ensuite, lors d'une étape de détermination 102, un ou plusieurs choix de pré-codage sont déterminés. Plus précisément, l'étape de détermination est divisée en une étape 102A de calcul des choix de pré-codage C1, C2 en fonction des premières données D1 et de l'algorithme de pré-codage, et une étape 102B de modification des choix de pré-codage C1, C2 en fonction des deuxièmes données D2 et de la méthode de stéganographie prédéterminée. L'étape 102B est également appelée étape de stéganographie 102B.

A la suite de l'étape de détermination 102, les choix de pré-codage sont obtenus et mis à disposition des logiciels de découpage 38 et de prédiction 40.

Ensuite, lors d'une étape de découpage 104, les premières données D1 sont divisées en blocs de données D3 en fonction des choix de découpage C1, c'est-à-dire divisées en plusieurs blocs images.

Puis, lors d'une étape de calcul 106, le logiciel de calcul 40 calcule les données d'erreur de prédiction D4.

Il est à noter que l'étape de modification 102B induit au niveau de l'étape de calcul 106 une augmentation de la quantité de données d'erreur de prédiction D4, puisqu'elle induit généralement une dégradation des données de prédiction D3, c'est-à-dire l'obtention d'un vecteur de mouvement non optimal pour lequel la prédiction est dégradée.

Puis, lors d'une étape de transformation-quantification 108, les données d'erreur de prédiction D4 sont transformées, au moyen d'une transformée spatial-fréquentiel, telle qu'une transformée en cosinus discrète, et le résultat de cette transformation est quantifié afin d'obtenir une suite de symboles correspondant aux premières données pré-codés D1 p.

Ensuite, au cours d'une étape de codage 110, les premières données pré-codés D1p et les choix de prédiction C1, C2 sont concaténés, puis codés, pour obtenir une suite de mots de code F1. Lors de l'étape de codage 110, chaque symbole de la suite de symboles obtenue suite à la concaténation des premières données pré-codés D1 p et des choix de prédiction C1, C2 est codé et correspond une fois codé à un mot de code.

Puis, lors d'une étape d'identification 112, le logiciel d'identification 56 identifie, à partir de la table de mots de code, les sous-mots des mots de code modifiables compris dans la suite de mots de code F1. Les sous-mots identifiés maintiennent la compatibilité du flux de bits mis en forme F3 avec le standard de compression lorsqu'ils sont modifiés. De tels sous-mots sont dits stables. Plus précisément, chaque sous-mot stable est tel qu'une modification du sous-mot dans la suite de mots de codes F1 est sans influence sur le résultat du décodage, par le décodeur 14, des mots de code qui suivent le mot de code auquel le sous-mot appartient.

Lors de l'étape d'identification 112, le logiciel d'identification 56 recherche dans chaque mot de code la présence d'un ou de bits à chiffrer formant un sous-mot, chaque bit à chiffrer étant tel qu'une modification du bit à chiffrer est sans influence sur le résultat du décodage réalisé par le décodeur, des mots de code qui suivent le mot de code auquel le bit à chiffrer appartient,

Avantageusement, chaque sous-mot a été déterminé de sorte qu'il vérifie les trois contraintes suivantes :
- une modification du sous-mot à partir du logiciel de chiffrement 58 est sans influence sur le résultat du décodage, par le décodeur 14, des mots de code qui suivent le mot de code auquel le sous-mot appartient,
- une modification du sous-mot à partir du logiciel de chiffrement 58 conduit à l'obtention d'un mot de code chiffré interprétable par le décodeur 14, c'est-à-dire qui a un sens pour le décodeur 14,
- une modification du sous-mot à partir du logiciel de chiffrement 58 conduit à l'obtention d'un mot de code chiffré qui, lors de la mise en forme du flux de bits chiffré F2 par le logiciel de mise en forme, est remplacé par une suite de bits de même taille que si aucune modification du sous-mot n'avait été effectuée.

Ensuite, au cours d'une étape de chiffrement 114, les sous-mots identifiés sont chiffrés, c'est-à-dire que les bits initiaux, également dénommés bits à chiffrer, qu'ils comprennent sont substitués par des bits chiffrés obtenus à partir des bits initiaux et de la clé de chiffrement. Le nombre de bits chiffrés remplaçant chaque sous-mots est le même que le nombre de bits initiaux dudit sous-mot.

A la suite de l'étape de chiffrement 114, seuls les sous-mots identifiés sont chiffrés, tandis que les autres mots de code de la suite de mots de code F1 ne sont pas chiffrés. Ainsi, à la suite de l'étape de chiffrement 114, seulement certains des mots de code du flux de bits chiffré F2 ont un contenu au moins partiellement chiffré.

Puis, lors d'une étape de mise en forme 116, le flux de bits chiffré F2 est mis en forme à partir de l'algorithme de codage entropique prédéterminé afin d'obtenir le flux mis en forme F3.

Ensuite, le flux mis en forme F3 est transmis, via le canal de communication 15, au décodeur 14 et notamment à l'unité de décodage 62.

A la suite de l'étape de mise en forme 116, le flux mis en forme F3 est robuste face aux méthodes de stéganalyse et la confidentialité du deuxième message M2 est améliorée, car l'étape de chiffrement 114 permet de modifier les bits relatifs aux choix de découpage C1 et de prédiction C2 et aux données d'erreur de prédiction D4, et ainsi de modifier les informations image, tels que la couleur ou la luminance, relatives à l'image actuelle à transmettre.

En effet, les méthodes de stéganalyse connues sont basées sur l'étude d'informations image, telles que la luminosité ou les couleurs, relatives aux données échangées. Or, l'étape de chiffrement 114 permet de changer ces informations image de sorte que les méthodes de stéganalyse connues sont incapables d'identifier la présence du deuxième message M2 et de récupérer le deuxième message M2.

A la suite de l'étape de mise en forme 116, le flux mis en forme F3 est également robuste vis-à-vis des méthodes de cryptanalyse, puisque la méthode de chiffrement sélectif appliquée ne permet pas de distinguer le flux mis en forme F3 d'un flux similaire n'ayant pas subi de chiffrement sélectif. En effet, le fait que, lors de l'étape de chiffrement 114, la suite de mots de code F1 est modifié afin que le flux mis en forme F3 reste conforme au standard de compression et garde le même débit et la même syntaxe, permet de rendre plus difficile l'identification du flux transmis sur le canal 15 comme étant un flux crypté, par un dispositif de surveillance des données échangées sur le canal de communication 15. Les méthodes de cryptanalyse connues ne sont donc pas adaptées au décryptage du flux mis en forme F3 et la confidentialité des premières D1 et deuxièmes D2 données est améliorée.

En variante, les étapes de codage 110, d'identification 112, de chiffrement 114 et de mise en forme 116 sont réalisées simultanément.

Selon une autre variante, les étapes de fourniture 100, détermination 102, découpage 104, calcul 106, transformation-quantification 108 et codage 110 sont réalisées par un premier module de codage dédié, également apte à réaliser, à la suite de l'étape de codage 110, une étape 111 A de mise en forme des mots de code de la suite de mots de code F1 suivant l'algorithme de codage entropique prédéterminé, et leur transmission. Dans cette variante, les étapes d'identification 112, de chiffrement 114 et de mise en forme 116 sont réalisées par un deuxième module distinct du premier module et adapté pour recevoir la suite de mots de codes mis en forme lors de l'étape de mise en forme 111A et transmis. Le deuxième module est alors configuré pour exécuter précédemment à l'étape d'identification 112, une étape 111 B de récupération des mots de code de la suite de mots de code F1, à partir des mots de code mis en forme reçus. L'étape de récupération 111 B est une étape globalement symétrique de l'étape de mise en forme 111 A. Dans cette variante, les étapes d'identification 112 et de chiffrement 114 sont réalisées à partir des mots de code récupérés.

### Fonctionnement du décodeur 14 :

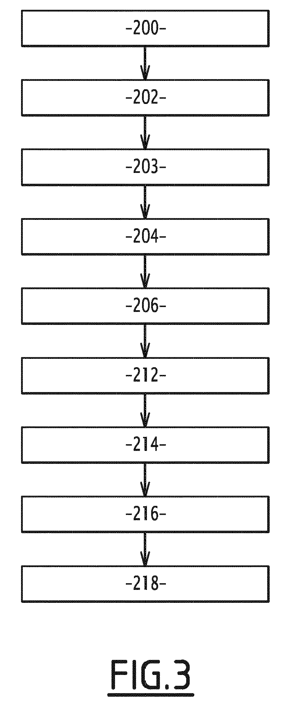

Le fonctionnement du décodeur 14 va maintenant être présenté, lors de la mise en oeuvre du procédé de décodage représenté à la figure 3.

Lors d'une étape de réception 200, l'unité de décodage 62 reçoit l'identifiant de chiffrement Ic et le flux mis en forme F3 qui a été traité par le codeur 12 conformément au procédé présenté ci-dessus et visible à la figure 2.

Ensuite, lors d'une étape de décodage entropique 202, le flux de bits mis en forme F3 est décodé entropiquement suivant l'algorithme de décodage entropique prédéterminé afin d'obtenir un flux décodé entropiquement F4.

Lors d'une étape suivante d'identification 203, le logiciel d'identification 73 recherche dans chaque mot de code la présence d'un ou de bits à déchiffrer suivant un procédé identique à celui de l'étape 112. En outre, au cours de cette étape d'identification 203, le logiciel d'identification 66 identifie, dans le flux décodé entropiquement F4, les bits chiffrés, à partir de la table de mots de code modifiables.

Puis, lors d'une étape de déchiffrement 204, le logiciel de déchiffrement 74 détermine la clé de chiffrement à partir du tableau de chiffrement et déchiffre les bits identifiés.

Ensuite, lors d'une étape de décodage 206, le logiciel de décodage 76 effectue un codage inverse de celui réalisé par le logiciel de codage 54 et les mots de code sont alors remplacés par les symboles auxquels ils correspondent, afin d'obtenir les données à post-décoder D1 p' et les choix de post-décodage C1', C2'. A la suite de l'étape de décodage 206, les données à post-décoder D1 p' et les choix de post-décodage C1', C2' sont à disposition de l'unité de post-traitement 64.

Puis, lors d'une étape de quantification-transformation inverse 212, une quantification inverse de chaque bloc image et une transformation fréquentiel-spatial des données qui résultent de la quantification inverse sont effectuées afin d'obtenir les données inversement transformées D4'.

Puis, lors d'une étape de stéganographie inverse 214, les données cachées D2' et donc l'information contenue dans le deuxième message M2 sont déterminées à partir de la méthode de stéganographie prédéterminée, des choix de post-décodage C1', C2' récupérés et des données inversement transformées D4'.

Ensuite, le procédé comprend une étape de prédiction inverse 216 au cours de laquelle les blocs de données post-décodée D3' sont déterminées à partir des données inversement transformées D4', des deuxièmes choix de post-décodage C2' et des données de référence D_{ref}.

Enfin, lors d'une étape de reconstitution 218, le premier message M1 est reconstitué à partir des blocs de données post-décodée D3' et des premiers choix de post-décodage C1' récupérés.

Les étapes de déchiffrement 204 et d'identification 203 sont les étapes symétriques des étapes de chiffrement 114 et d'identification 112.

Les étapes de décodage entropique 202, décodage 206 et de quantification-transformation inverse 212 sont les étapes symétriques des étapes de mise en forme 116, codage 110 et de transformation-quantification 108.

En outre, les étapes de prédiction inverse 216, de stéganographie inverse 214 et de reconstitution 218 sont globalement les étapes symétriques des étapes de calcul 106, de stéganographie 102B et de découpage 104.

En variante, les étapes de décodage entropique 202, d'identification 203, de déchiffrement 204 et de décodage 206 sont réalisées simultanément.

Les modes de réalisation et variantes envisagés ci-dessus sont propres à être combinés entre eux pour donner lieu à d'autres modes de réalisation de l'invention.

Ainsi, à la lecture de la présente description, l'homme du métier constatera qu'à la suite des étapes de découpage 104, de calcul 106 et de transformation-quantification 108, les premières données D1 deviennent des premières données pré-codées D1p et on obtient une suite de symboles comprenant les premières données pré-codées D1 p et les choix de pré-codage C1, C2.

Ensuite, lors de l'étape de codage 110 chaque symbole est codé, c'est-à-dire que les symboles correspondants aux premières données pré-codées D1 p et aux choix de pré-codage C1, C2 sont codés pour obtenir plusieurs groupes de bits successifs.

Lors de l'étape d'identification 112, on identifie les bits des groupes de bits successifs, également appelés bits à chiffrer, qui ne modifient que de manière négligeable les contextes du procédé de décodage représenté à la figure 3. Un bit est considéré comme modifiant de manière négligeable les contextes du procédé de décodage, lorsque la modification de ce bit, par exemple, par chiffrement, ne conduit pas à obtenir des flux de bits non-compatibles pour le décodeur 14.

Le procédé de protection des données échangées et le codeur 12 permettent, grâce aux étapes de détermination 102, de découpage 104, de calcul 106 et de codage 110 d'une part, et aux étapes d'identification 112 et de chiffrement 114, d'autre part, d'obtenir un flux de bits dans lequel les bits sont chiffrés de manière indépendante de la stéganographie, c'est-à-dire que ce ne sont pas seulement les bits du message à cacher M2 qui sont chiffrés. On obtient ainsi un flux de bits qui résiste mieux aux méthodes de stéganalyse connues et la détection et la récupération du message à cacher par des personnes qui ne disposent pas du décodeur 14 devient difficile, voire impossible.

Lors de l'étape de détermination 102, les choix de pré-codage C1, C2 sont calculés par le logiciel 32 de calcul. Les choix de pré-codage sont, par exemple, calculés en fonction des données de support D1 et d'un algorithme de pré-codage prédéterminé. Ensuite, les choix de pré-codage C1, C2 sont modifiés, par le logiciel de stéganographie 34. La modification des choix de pré-codage C1, C2 est fait en fonction des deuxièmes données D2 et de la méthode de stéganographie prédéterminée. Plus précisément, c'est, par exemple, la méthode de stéganographie utilisée qui est déterminante pour savoir quels choix de pré-codage seront modifiés et c'est la valeur des deuxièmes données D2 qui est déterminante pour savoir quelle sera la nouvelle valeur, c'est-à-dire la valeur modifiée, des choix de pré-codage.

## Revendications

1. Procédé de protection de données échangées entre un codeur (12) et un décodeur (14) d'un système de codage/décodage (10) d'une installation vidéo,, **caractérisé en ce que** le procédé comprend les étapes suivantes de :
- a) fourniture (100) d'un premier message vidéo (M1) comprenant des premières données (D1), et d'un deuxième message (M2) comprenant des deuxièmes données (D2),
- b) détermination (102) de choix de pré-codage (C1, C2) des premières données (D1), en fonction des deuxièmes données (D2) et suivant une méthode de stéganographie prédéterminée,
- c) pré-codage (104, 106, 108) des premières données (D1) en fonction des choix de pré-codage (C1, C2) déterminés, les premières données pré-codées (D1p) et les choix de pré-codage (C1, C2) formant une suite de symboles,
- d) codage (110), par un module de codage (54), de chaque symbole, chaque symbole correspondant, une fois codé, à un groupe de bits successifs,
- e) identification (112), dans chaque groupe de bits, de la présence d'un ou plusieurs bits à chiffrer, chaque bit à chiffrer étant tel qu'une modification du bit à chiffrer est sans influence sur le résultat du décodage, réalisé par le décodeur (14), des groupes de bits qui suivent le groupe de bits auquel le bit à chiffrer appartient,
- f) chiffrement (114), dans chaque groupe de bits et au moyen d'un module de chiffrement (58), du ou des bits à chiffrer identifiés, pour obtenir un flux de bits chiffré (F2),
- g) mise en forme (116) du flux de bits chiffré, suivant un algorithme de codage entropique prédéterminé,
- h) transmission du flux mis en forme (F3) au décodeur (14).

2. Procédé selon la revendication 1, dans lequel, à la suite de l'étape de codage (110) et précédemment à l'étape d'identification (112), le procédé comprend des étapes de :
- d') mise en forme (111 A) des groupes de bits suivant l'algorithme de codage entropique prédéterminé,
- d") récupération (111 B) des groupes de bits à partir des groupes de bits mis en forme, l'étape de récupération (111 B) étant globalement une étape symétrique de l'étape de mise en forme d'),
et dans lequel les étapes d'identification (112) et de chiffrement (114) sont réalisées sur les groupes de bits récupérés.

3. Procédé selon la revendication 1 ou la revendication 2, dans lequel, lors de l'étape de chiffrement (114), une clé de chiffrement est déterminée et le ou les bits à chiffrer identifiés sont substitués par un ou des bits chiffrés obtenus à partir de la clé de chiffrement et dans lequel, lors de l'étape de chiffrement (114), le nombre de bits à chiffrer identifiés est identique au nombre de bits chiffrés substituant le ou les bits à chiffrer identifiés.

4. Procédé selon l'une quelconque des revendications précédentes, dans lequel, l'étape de détermination (102) de choix de pré-codage comprend les étapes suivantes de :
- b') calcul (102A) des choix de pré-codage (C1, C2) en fonction des premières données (D1) et d'un algorithme de pré-codage prédéterminé, et
- b") modification (102B) des choix de pré-codage (C1, C2) calculés en fonction des deuxièmes données (D2) et suivant la méthode de stéganographie prédéterminée.

5. Procédé selon la revendication 4, dans lequel, précédemment à l'étape de détermination (102) de choix de pré-codage, le procédé comprend une étape de mémorisation de données de référence (I_{REF}) précédemment transmises au décodeur (14),
dans lequel, lors de l'étape de calcul (102A) des choix de pré-codage, des données de prédiction (D3) sont calculées, les données de prédiction (D3) étant déterminées en fonction de l'algorithme de pré-codage et d'une comparaison entre les premières données (D1) et les données de référence (I_{REF}), les choix de pré-codage (C2) comprenant les données de prédiction (D3),
et dans lequel, lors de l'étape de modification (102B) des choix de pré-codage, les données de prédiction (D3) sont modifiées.

6. Procédé selon l'une quelconque des revendications précédentes, dans lequel suite à l'étape de mise en forme (116), le flux mis en forme (F3) est conforme à un standard de compression vidéo, le standard de compression vidéo étant soit le standard H.264/MPEG-4 AVC, soit le standard H.265/MPEG-H HEVC.

7. Procédé selon l'une quelconque des revendications précédentes, dans lequel l'algorithme de codage entropique prédéterminé est soit du type « *Context Adaptive Variable Length Coding* », soit du type « *Context Adaptive Binary Arithmetic Coding ».*

8. Procédé selon l'une quelconque des revendications précédentes, dans lequel à la suite de l'étape de transmission, des étapes de décodage entropique (202) du flux mis en forme (F3), d'identification (203) des bits chiffrés, de déchiffrement (204) et de décodage (206) sont réalisées, ces étapes étant respectivement symétriques des étapes de mise en forme (116), d'identification (112), de chiffrement (114) et de codage (110),
dans lequel, à la suite de l'étape de décodage (206), des données à post-décoder (D1 p') et des choix de post-décodage (C1', C2') sont obtenus,
et dans lequel, le procédé comprend une étape de post-décodage (212, 216, 218), symétrique de l'étape de pré-codage (104, 106, 108), afin de récupérer l'information contenue dans le premier message (M1), l'étape de post-décodage (216, 218) étant réalisée en fonction des données à post-décoder et des choix de post-décodage et une étape (214) de détermination de l'information contenue dans le deuxième message (M2) en fonction des choix de post-décodage et de la méthode de stéganographie prédéterminée.

9. Codeur d'un système de codage/décodage (10) de données échangées entre un codeur (12) et un décodeur (14) d'une installation vidéo, le système mettant en oeuvre un procédé conforme à l'une quelconque des revendications 1 à 8, caractérisé en qu'il comprend :
- une première unité (16) de fourniture d'un premier message (M1) comprenant des premières données (D1),
- une deuxième unité (18) de fourniture d'un deuxième message (M2) comprenant des deuxièmes données (D2),
- un module (32, 34) de détermination de choix de pré-codage (C1, C2) des premières données (D1), en fonction des deuxièmes données (D2) et suivant une méthode de stéganographie prédéterminée,
- un module de pré-codage (38, 40, 42, 44) des premières données (D1) en fonction des choix de pré-codage (C1, C2) déterminés, les premières données pré-codées (D1p) et les choix de pré-codage (C1, C2) formant une suite de symboles,
- un module de codage (54) de chaque symbole, chaque symbole correspondant une fois codé à un groupe de bits successifs,
- un module (56) d'identification, dans chaque groupe de bits de la présence d'un ou plusieurs bits à chiffrer, chaque bit à chiffrer étant tel qu'une modification du bit à chiffrer est sans influence sur le résultat du décodage réalisé par le décodeur (14), des groupes de bits qui suivent le groupe de bits auquel le bit à chiffrer appartient,
- un module de chiffrement (58) configuré pour chiffrer dans chaque groupe de bits le ou les bits à chiffrer identifiés, afin d'obtenir un flux de bits chiffré (F2),
- un module de mise en forme du flux de bits chiffré (F2), suivant un algorithme de codage entropique prédéterminé,
- un module (60) de transmission du flux mis en forme (F3) au décodeur (14).

10. Décodeur (14) d'un système de codage/décodage (10) de données échangées entre un codeur (12) et un décodeur (14) d'une installation vidéo, le système mettant en oeuvre un procédé conforme à l'une quelconque des revendications 1 à 8, caractérisé en qu'il comprend :
- un module de décodage entropique configuré pour recevoir un flux de bits mis en forme (F3) et le décoder entropiquement suivant un algorithme de décodage entropique prédéterminé,
- un module de déchiffrement (73, 74), propre à identifier, puis déchiffrer, dans le flux décodé entropiquement (F4), un ou des bits chiffrés,
- un module de décodage (76) configuré pour, à la suite du déchiffrement du flux de bits décodé entropiquement (F4) par le module de déchiffrement (66, 68), effectuer un décodage du flux de bits et obtenir un premier ensemble de données à post-décoder (D1 p') et un deuxième ensemble de choix de post-décodage (C1', C2'),
- un module de post-décodage (84, 86, 90, 92, 94) configuré pour récupérer l'information contenue dans le premier message (M1) à partir du premier ensemble et du deuxième ensemble, et
- un module de détermination (88) de l'information contenue dans le deuxième message (M2) en fonction du deuxième ensemble et de la méthode de stéganographie prédéterminée.

11. Système de codage/décodage (10) comportant un codeur (12) et un décodeur (14), **caractérisé en ce que** le codeur (12) est conforme à la revendication 9, et **en ce que** le décodeur (14) est conforme à la revendication 10.
